# EUROPEAN PATENT APPLICATION

(11) **EP 4 283 021 A1**
(43) Date of publication of application: **29.11.2023**
(21) Application number: 22742421.5
(22) Date of filing: 06.01.2022
(51) Int. Cl.: C25B 11/051, C25B 11/073, C25B 1/26

(54) **ELECTRODE MANUFACTURING METHOD AND MANUFACTURING DEVICE, AND ELECTRODE OBTAINED THEREWITH**

(30) Priority: 19.01.2021 JP 2021006362
(71) Applicant: De Nora Permelec Ltd, Fujisawa-shi, Kanagawa 252-0816 (JP)
(72) Inventor: AWALUDIN, Zaenal, Fujisawa-shi, Kanagawa 252-0816 (JP); NISHIKI, Yoshinori, Fujisawa-shi, Kanagawa 252-0816 (JP)
(74) Representative: Wächtershäuser & Hartz Patentanwaltspartnerschaft mbB
(86) International application number: PCT/JP2022/000182
(87) International publication number: WO 2022/158296

(57) **Abstract**

[Problem] To provide an electrode manufacturing method and an electrode manufacturing device with high productivity, and an electrode obtained therewith.

[Solution] Provided is an electrode manufacturing method, comprising performing pyrolysis while simultaneously directly spraying a coating liquid onto a heated substrate to form a catalytic layer or intermediate layer on the substrate.

## Description

### TECHNICAL FIELD

The present invention relates to an electrode manufacturing method and manufacturing device, and an electrode obtained therewith.

### BACKGROUND ART

For electrodes used in manufacturing equipment for various chemical products and electrolytic processing equipment for saltwater or the like, electrodes with excellent durability and in which a substrate that retains electron conductivity and structure has been coated with a catalytic layer that exhibits a catalytic function are widely used. Pyrolysis methods, electroplating, dry methods, resin fixing methods, etc. are known as manufacturing processes for such electrodes.

Pyrolysis methods are methods wherein a multi-component-based precursor solution in which a metal element which serves as an electrode catalyst and a metal element which serves as a matrix have been dissolved is prepared, and a composite catalyst layer is formed by applying the solution to a surface of a metal which serves as a base and firing the same. Because these methods are convenient and affordable industrial manufacturing methods in which heating and firing can be carried out under normal atmospheric pressure and have the advantage of enabling the use of high-priced precious metals as the electrode catalyst with a good yield, these methods have conventionally been used as manufacturing processes for electrodes. Patent Documents 1 to 3 describe forming coatings on substrates using pyrolysis methods.

However, because there is a need to repeat the series of steps of application, drying, firing, and cooling multiple times in pyrolysis methods, the manufacture of an electrode requires a long period of time and the steps each require space, equipment, and various utilities involved therewith such as electrical power, so the manufacture of electrodes has high costs and low productivity. Furthermore, there is the problem that, when the coating liquid comprises a valve metal (Ti, Nb, Ta, Zr, W, or the like), the valve metal readily undergoes a hydration reaction in the presence of water or water vapor, forming hydrous oxides before oxides of precious metals are formed on the substrate, which results in a decrease in the homogeneity of the coating.

Non-Patent Document 1 describes a method for continuously producing RuO₂ and TiO₂ particles using an ultrasonic spray pyrolysis process and a method for coating a Ti anode using this method. In this method, a solution comprising Ru and Ti is made into a mist by an ultrasonic atomizer, the mist is sent to a heated tube furnace by a carrier gas and crystallized into RuO₂ and TiO₂ particles, and the RuO₂ and TiO₂ particles are then adsorbed on a Ti anode disposed in an electrostatic field. However, the high-priced RuO₂ precipitates within the tube furnace before reaching the Ti anode which is the destination, so productivity falls and application of this method to electrode manufacturing on an industrial scale is difficult.
Patent Document 1: JP S48-3954 A
Patent Document 2: JP S46-3258 A
Patent Document 3: JP S48-18716 A

Non-Patent Document 1: Kosevic, Milica, et al. "A continuous process for the ultrasonic spray pyrolysis synthesis of RuO2/TiO2 particles and their application as a coating of activated titanium anode." Advanced Powder Technology, vol. 28, 2017, pp.43-49, doi: 10.1016/j.apt.2016.07.015

### SUMMARY OF INVENTION

The purpose of the present invention is to provide an electrode manufacturing method and electrode manufacturing device with high productivity, and an electrode obtained therewith.

As a result of various studies, the inventors found that compared with methods using conventional pyrolysis methods, productivity of electrodes is improved by performing pyrolysis while simultaneously directly spraying a coating liquid onto a heated substrate to form a catalytic layer or intermediate layer on the substrate, and furthermore gained the knowledge that the distinct electrode surface attributes of high homogeneity, few cracks, and high density were obtained, arriving at the present invention.

That is, the present invention relates to an electrode manufacturing method, comprising performing pyrolysis while simultaneously directly spraying a coating liquid onto a heated substrate to form a catalytic layer or intermediate layer on the substrate.

According to one embodiment of the present invention, the abovementioned electrode manufacturing method comprising directly spraying the coating liquid in an electrostatic field environment is provided.

According to one embodiment of the present invention, the abovementioned electrode manufacturing method wherein the coating liquid comprises one or more valve metals is provided.

According to one embodiment of the present invention, the abovementioned electrode manufacturing method wherein the coating liquid comprises one or more organic solvents is provided.

According to one embodiment of the present invention, the abovementioned electrode manufacturing method wherein the electrode is an insoluble metal electrode is provided.

According to one embodiment of the present invention, the abovementioned electrode manufacturing method wherein the substrate comprises one or more materials chosen from metals, alloys, carbonaceous materials, silicon, or ceramics is provided.

Further, according to one embodiment of the present invention, an electrode manufacturing device, comprising:
a heating device for heating a substrate; and
an atomizer for spraying a coating liquid directly onto the substrate is provided.

Furthermore, according to one embodiment of the present invention, the abovementioned electrode manufacturing device further comprising an electrostatic field generator is provided.

### EFFECTS OF INVENTION

According to the present invention, an electrode manufacturing method and an electrode manufacturing device with high productivity can be provided.

### BRIEF DESCRIPTION OF DRAWINGS

Fig. 1 is a scanning electron micrograph of a surface of an electrode according to Example 4.
Fig. 2 is a scanning electron micrograph of a cross-section of the electrode according to Example 4.

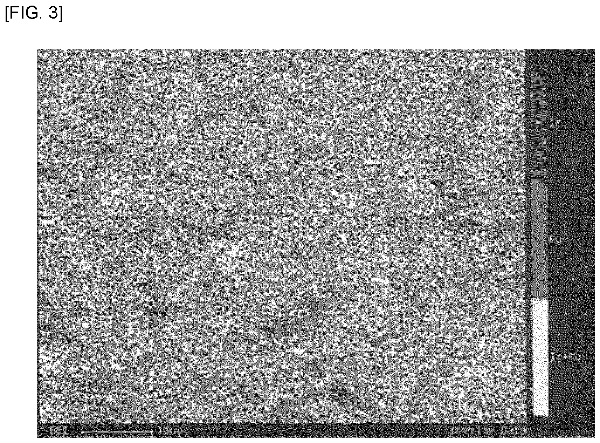

Fig. 3 is an element mapping image of the surface of an electrode according to Example 4 by an electron probe microanalyzer.

### DESCRIPTION OF EMBODIMENTS

One embodiment of the present invention shall be explained in detail below. The present invention is not limited to the following embodiment and the present invention can be implemented with the addition of appropriate modifications so long as the effects of the present invention are not impaired. Note that "A-B" in the following explanation means "A or greater and B or lower".

The electrode manufacturing method according to the present embodiment comprises performing pyrolysis while simultaneously directly spraying a coating liquid onto a heated substrate to form a catalytic layer or intermediate layer on the substrate. By directly spraying the coating liquid onto the heated substrate, the pyrolytic reaction of the coating components occurs simultaneously with the coating liquid being sprayed onto the substrate and the coating produced simultaneously or immediately thereafter is dried and fired, forming the catalytic layer or intermediate layer of the electrode, which comprises the coating components. Therefore, the steps of application of the coating liquid, drying, and firing, which are normally necessary, can be performed in a single step. Accordingly, an electrode can be manufactured with fewer steps, less equipment, and in a shorter time as compared with conventional pyrolysis methods performed after a coating liquid has been applied. That is, productivity can be improved over that of conventional manufacturing methods for electrodes.

Furthermore, by shortening the state corresponding to the drying step, which can impart heterogeneity to the coating due to the formation of hydrous oxides or the like, an unexpected effect is obtained wherein the formation of hydrous oxides is suppressed and an electrode having, on the substrate, a catalytic layer or intermediate layer with high homogeneity is obtained.

In the present description, "catalytic layer" means a layer or film comprising a catalytic component for a desired purpose. The location of the "catalytic layer" is not limited to the outermost surface of the electrode and another layer or film may be present on the "catalytic layer". In the present description, "intermediate layer" means a layer or film on which another layer or film is further formed.

The substrate used in the electrode manufacturing method according to the present embodiment is heated to a predetermined temperature before direct spraying of the coating liquid. The predetermined temperature is selected from those in a range which does not result in degradation of the substrate, preferably 300°C to 600°C, more preferably 350°C to 500°C, and yet more preferably 400°C to 450°C.

The coating liquid used in the electrode manufacturing method according to the present embodiment is a solution comprising components to impart desired properties such as corrosion resistance or catalytic activity to the catalytic layer or intermediate layer on the substrate. Such components include metals, metal oxides, organic solvents, polymers, carbon or diamond particles, etc. The solvent of the coating liquid should have properties allowing spraying onto the substrate and may be water, an organic solvent, or a mixture thereof. The droplets of the sprayed coating liquid are preferably 2-50 nm.

The electrode manufacturing method according to the present embodiment preferably comprises directly spraying the coating liquid in an electrostatic field environment. By directly spraying the coating liquid in an electrostatic field environment, the coating liquid and the coating components produced by pyrolysis more readily attach to the substrate due to the action of the electrostatic field and the yields of the various components included in the coating liquid improve, by which productivity can be further improved. Moreover, improvement of the adhesion of the coating components can contribute to improvements in homogeneity and density among the surface attributes of the electrode.

In the electrode manufacturing method according to the present embodiment, the coating liquid preferably comprises one or more valve metals. Due to the coating liquid comprising one or more valve metals, a coating of valve metal oxides is formed on the substrate and the corrosion resistance of the electrode is further improved. The valve metal is preferably selected from Al, Ta, Nb, W, Mo, V, Bi, Ti, Zr, Hf, and Si.

In the electrode manufacturing method according to the present embodiment, the coating liquid preferably comprises one or more organic solvents. Due to the coating liquid comprising one or more organic solvents, hydration reactions of the components included in the coating liquid while spraying and/or after spraying can be suppressed. By doing so, the proportion of components in the coating liquid that are present in the intended form on the substrate is improved and the homogeneity of the coating on the obtained electrode is improved. The type of the organic solvent is not particularly limited and the organic solvent is selected from hydrocarbons, alcohols, ketones, esters, ethers, and the like. The organic solvent is especially preferably toluene.

In the electrode manufacturing method according to the present embodiment, the electrode is preferably an insoluble metal electrode. The electrode manufacturing method according to the present embodiment can suppress the formation of hydrous oxides and produce a coating of high resultant homogeneity on the electrode and is thus suitable as a manufacturing method for an insoluble metal electrode.

In the electrode manufacturing method according to the present embodiment, the substrate preferably comprises one or more materials selected from metals, alloys, carbonaceous materials, silicon, or ceramics. In the electrode manufacturing method according to the present embodiment, the coating liquid is directly sprayed onto the substrate, so the shape of the substrate is not particularly limited and the substrate can be various shapes, such as a rod-like shape, a tube-like shape, a spheroidal shape, a ribbon-like shape, a plate-like shape, a porous plate-like shape such as an expanded metal or a punched plate, a mesh-like shape, a shape where a modification has been added to any of the foregoing, a cloth such as a carbon cloth, or paper such as carbon paper. A machining or etching process which imparts a desired irregularity may be performed on the surface of the substrate. In the electrode manufacturing method according to the present embodiment, the coating liquid is directly sprayed onto the substrate, so coating can be performed easily and efficiently on substrates of various shapes and productivity is high.

In the electrode manufacturing method according to the present embodiment, the coating liquid preferably comprises one or more platinum group metals. Due to the coating liquid comprising one or more platinum group metals, an electrode with high corrosion resistance is obtained.

The electrode manufacturing device according to the present embodiment comprises a heating device for heating a substrate and an atomizer for spraying a coating liquid directly onto the substrate. Having this feature makes the electrode manufacturing method of the present invention possible. The heating device may be a device having a mechanism for directly contacting and heating the substrate such as a hot-plate or may be a device having a mechanism for heating the substrate without direct contact such as inductive heating. The heating device preferably has a mechanism for keeping the temperature of the substrate constant while the coating liquid is sprayed.

The atomizer may be that which is operated manually by an operator to spray or may be that in which operations such as movement and spraying are performed automatically by a control device. There may be a single atomizer or there may be multiple atomizers.

The spray pattern of the coating liquid sprayed by the atomizer is not limited and may be flat (fan-shaped), a full cone (round), a hollow cone (annular), or the like. As a spray mechanism, the atomizer may be a single-fluid nozzle which sprays a liquid by fluid pressure alone or may be a double-fluid nozzle which sprays a liquid together with a gas.

The electrode manufacturing device according to the present embodiment preferably further comprises an electrostatic field generator. By further comprising an electrostatic field generator, the yields of the components included in the coating liquid improve and productivity improves, as discussed above. The electrostatic field generator should be that capable of generating an electrostatic field environment on at least the periphery of the substrate surface.

Electrodes obtained by the electrode manufacturing method and manufacturing device according to the present embodiment can have wide-ranging carried amounts of a metal component such as a valve metal or precious metal and thicknesses of the catalytic layer or intermediate layer, but the carried amount of the metal component is preferably 50 g/m² or less, more preferably 25 g/m² or less, still more preferably 10 g/m² or less, and especially preferably 3.5 g/m² or less. Relating to the thickness of the catalytic layer or intermediate layer, the layer preferably has a thickness of 100 µm or less, more preferably 50 µm or less, still more preferably 10 µm or less, and especially preferably 500 nm or less. In the electrodes obtained by the electrode manufacturing method and manufacturing device of the present invention, the catalytic layer or intermediate layer has high density and high homogeneity. Therefore, even though the electrodes have a smaller carried amount of a component such as a precious metal in the catalytic layer or intermediate layer and a thinner thickness than electrodes obtained with conventional manufacturing methods, the electrodes have equivalent or better performance than conventionally manufactured electrodes. That is, the electrodes obtained by the electrode manufacturing method and manufacturing device of the present application are manufactured at costs lower than those for conventional electrodes and have equivalent or better performance.

In the electrodes obtained by the electrode manufacturing method and manufacturing device according to the present embodiment, the catalytic layer or intermediate layer may be formed directly on the substrate or the catalytic layer or intermediate layer may be formed on another underlayer or the like on the substrate.

There are few cracks in the coating in the electrodes obtained by the electrode manufacturing method and manufacturing device according to the present embodiment because the density and the homogeneity of the coating are high. Because cracks in the coating can cause corrosion of the substrate and consequently, defects in devices comprising the electrodes, the electrodes obtained by the electrode manufacturing method and manufacturing device according to the present embodiment are highly reliable.

### EXAMPLES

Examples of the present invention shall be shown below. The details of the present invention shall not be construed to be limited by these examples.

The coating liquids of Examples 1-6 and Comparative Examples 1 and 2 were prepared by adding an iridium(III) acetyl acetone solution and a ruthenium(III) acetyl acetone and titanium diisopropoxide bis(acetyl acetonate) solution to toluene to achieve the concentrations of iridium, ruthenium, and titanium described in Table 1.

Titanium plates (100 mm × 100 mm, thickness: 1 mm) were placed in a commercially available microspray device (model number: KM-150, manufactured by SPD Laboratory, Inc.) and heated to 400°C. The hot plate has a temperature adjustment function and the temperature of the titanium plate was maintained while coating.

The titanium plates were coated by spraying the coating liquids according to Examples 1-6 onto titanium plate surfaces under the following conditions using a spray coater (model number: MK-3-0.8, manufactured by FUSO SEIKI CO., LTD.).

### (Coating Conditions)

Spray movement speed: 150 mm/s
Spray amount: 0.1 ml/s
Nozzle pressure: 0.15 MPa
Nozzle diameter: 800 µm
Distance from titanium plate: 220 mm

In order to spray a predetermined amount of the coating liquid such that the carried amounts of a precious metal (theoretical values) described in Table 1 are obtained, the spraying of the coating liquid on an entire titanium plate having been completed was made one cycle and spraying of the coating liquid was repeated for 20-35 cycles. Then, the titanium plates were set aside until they reached room temperature to manufacture the electrodes according to Examples 1-6.

The electrodes according to Comparative Examples 1 and 2 were manufactured using conventionally known pyrolysis methods. The coating liquids according to Comparative Examples 1 and 2 were sprayed on the surfaces of titanium plates (100 mm × 100 mm, thickness: 1 mm) under the same conditions as in Examples 1-6. The titanium plates on which the coating liquids were sprayed were dried for 10 minutes in a dryer (model number: DX302, manufactured by Yamato Scientific co., ltd.) which was heated to 60°C and then fired for 15 minutes in an electric furnace (model number: FuL 232FB, manufactured by Advantec Co., Ltd.) which was heated to 480°C. The titanium plates on which the coating liquids had been sprayed which were removed from the electric furnace were set aside until they reached room temperature and a cycle of once again spraying the coating liquid, drying, and firing was repeated a total of 8 times to manufacture the electrodes according to Comparative Examples 1 and 2.

The manufacturing times for the electrodes according to Example 3 and the electrode according to Comparative Example 1, which use coating liquids with the same composition, were about 2 hours and about 6 hours, respectively. It is understood that although the carried amounts of the precious metal (theoretical values) differ, an electrode can clearly be manufactured in a shorter time according to the manufacturing method of the present invention.

The standard electrode potential (SEP) and the O₂/Cl₂ ratio in gas generated from the anode at a current density of 4 kA/m² in a pH 3 200 g/L NaCl solution at 90°C were measured for each of the electrodes according to Examples 1-6 and Comparative Examples 1 and 2. The electrolysis time was 30 minutes. The standard electrode potential and the O₂/Cl₂ ratio in gas generated from the anode immediately after electrolysis are shown in Table 1.

**Table 1**

| | MOLAR CONCENTRATIONS IN COATING LIQUID (Ir : Ru : Ti) | CARRIED AMOUNT OF PRECIOUS METAL (THEORETICAL VALUE) (g/m²) | SEP AT 4 kA/m² (V vs. SCE) | O₂/Cl₂ (% vol) |
|---|---|---|---|---|
| EXAMPLE 1 | 0.04 : 0.04 : 0.04 | 0.62 | 1.11 | 0.04 |
| EXAMPLE 2 | 0.04 : 0.04 : 0.04 | 1.82 | 1.1 | 0.04 |
| EXAMPLE 3 | 0.04 : 0.04 : 0.04 | 3.16 | 1.08 | 0.07 |
| EXAMPLE 4 | 0.04 : 0.04 : 0.08 | 0.93 | 1.13 | 0.03 |
| EXAMPLE 5 | 0.04 : 0.04 : 0.08 | 1.11 | 1.12 | 0.06 |
| EXAMPLE 6 | 0.04 : 0.04 : 0.16 | 1.24 | 1.16 | 0.08 |
| COMPARATIVE EXAMPLE 1 | 0.04 : 0.04 : 0.08 | 3.8 | 1.09 | 0.44 |
| COMPARATIVE EXAMPLE 2 | 0.04 : 0.04 : 0.08 | 13.1 | 1.13 | 0.45 |

The electrodes according to Examples 1-6 had standard electrode potentials which were almost identical to those of the electrodes according to Comparative Examples 1 and 2, which were manufactured using conventionally known pyrolysis methods. Surprisingly, the O₂/Cl₂ ratios in gas generated from the anodes of the electrodes according to Examples 1-6 were about ten times lower as compared with those for the electrodes according to Comparative Examples 1 and 2. That is, it is understood that the electrodes according to Examples 1-6 have the property of the chlorine-generating potential being lower than that of the electrodes according to Comparative Examples 1 and 2.

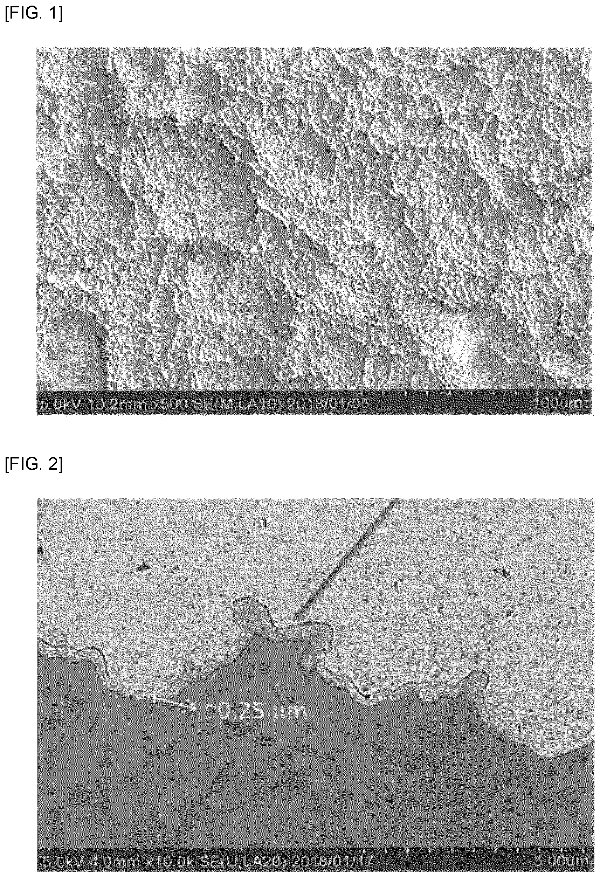

Fig. 1 and 2 are scanning electron micrographs of the surface and cross-section, respectively, of an electrode according to Example 4. As shown in Fig. 1, no cracks are found in the coating layer on the substrate. As shown in Fig. 2, no cracks are found even observing the electrode from a cross-section and an approximately 0.25 µm (250 nm) homogeneous coating layer is formed on the substrate. That is, it is understood that an electrode having a coating layer with high homogeneity on a substrate was obtained by using the method of the present invention. Further, it can be said that it became possible to reduce cracks in the coating layer by having used the method of the present invention, and this is understood to contribute to improvements in reliability and extended lifespans for electrodes.

## Claims

1. An electrode manufacturing method, comprising performing pyrolysis while simultaneously directly spraying a coating liquid onto a heated substrate to form a catalytic layer or intermediate layer on the substrate.

2. The electrode manufacturing method according to claim 1, comprising directly spraying the coating liquid in an electrostatic field environment.

3. The electrode manufacturing method according to claim 1 or 2, wherein the coating liquid comprises one or more valve metals.

4. The electrode manufacturing method according to any one of claims 1 to 3, wherein the coating liquid comprises one or more organic solvents.

5. The electrode manufacturing method according to any one of claims 1 to 4, wherein the electrode is an insoluble metal electrode.

6. The electrode manufacturing method according to any one of claims 1 to 5, wherein the substrate comprises one or more materials chosen from metals, alloys, carbonaceous materials, silicon, or ceramics.

7. An electrode manufacturing device, comprising:
a heating device for heating a substrate; and
an atomizer for spraying a coating liquid directly onto the substrate.

8. The electrode manufacturing device according to claim 7, further comprising an electrostatic field generator.
